# EUROPEAN PATENT APPLICATION

(11) **EP 1 710 600 A1**
(43) Date of publication of application: **11.10.2006**
(21) Application number: 05106288.3
(22) Date of filing: 11.07.2005
(51) Int. Cl.: G01S 5/14, G01S 5/00

(54) **Subscriber Identity Module with satellite positioning system receiver and antenna**

(30) Priority: 07.04.2005 FI 20050357
(71) Applicant: Savolainen, Risto Kalevi, 06650 Le Rouet (FR)
(72) Inventor: Savolainen, Risto Kalevi, 06650 Le Rouet (FR)
(74) Representative: Valkeiskangas, Tapio Lassi Paavali

(57) **Abstract**

The invention is related to a subscriber identity module (1-4, 2-2), to user equipment (1-2) comprising a subscriber identity module (1-4, 2-2) and to a communications system that it is adapted to receive location information from said user equipment (1-2). The subscriber identity module (1-4, 2-2) comprises contacts (2-10) for powering the module (1-4, 2-2) from the user equipment (1-2) power supply. The invention is known to the fact that the subscriber identity module (1-4, 2-2) comprises a GPS receiver (1-6, 2-4) and an antenna (1-8, 2-6).

## Description

### Field of the invention

The present invention relates to communications systems and more particularly to a module, user equipment, a system and a method for locating user equipment in a communications system.

### Background of the invention

The accurate location of user equipment, such as a GSM (Global System for Mobile Communications) mobile device, cannot be determined using the information from a cellular network. The information enables the location only of an accuracy of about 100-300 meters in rural areas and 50-100 meters in city areas. For example, in a case of an emergency call, it is vital to find out the exact location from which the call was made to be able to get help to the site as fast as possible. If the call was made by a mobile device, which cannot accurately be located, the rescue service may miss many vital minutes.

GPS (Global Positioning System) receivers could offer a better accuracy, but they are expensive and are not widely carried and used by public. GPS receivers do not work reliably or at all indoors and in canyons, like in between high buildings.

There are also Assisted GPS (AGPS) systems working in conjunction with terrestrial cellular networks. AGPS systems help the GPS receiver perform the tasks required to make range measurements and position solutions. With assistance from outside sources, from the network, the GPS receiver can operate more quickly and efficiently than it would unassisted, because a set of tasks that it would normally handle is shared with the assistance server. Furthermore, due to the assistance information delivered over the cellular network, an AGPS receiver is about 1,000 times more sensitive than a normal GPS receiver and consequently it can also be used indoors and in canyons.

However, one of the disadvantages associated with the above arrangement is that these devices are also expensive and not widely available and used by the consumers.

### Brief disclosure of the invention

An object of the present invention is thus to provide a method and an apparatus for implementing the method so as to solve the above problems. The objects of the invention are achieved by a method and an arrangement, which are characterized by what is stated in the independent claims. The preferred embodiments of the invention are disclosed in the dependent claims.

The invention is based on the idea of adding a high accuracy satellite positioning system functionality to the existing non-satellite positioning system user equipment without any modifications to the device itself but only by inserting a new subscriber identity module comprising a satellite positioning system receiver (1-6, 2-4) and an antenna (1-8, 2-6).

An advantage of the method and the arrangement of the invention is that user equipment can be located more accurately. The location method is also easy to install to the current user equipment, which equipment are widely used. The method and the arrangement of the invention are also inexpensive.

### Brief description of the drawings

In the following the invention will be described in greater detail by means of preferred embodiments with reference to the attached drawings, in which
Figure 1 shows user equipment with an AGPS capable SIM card according to the invention and its embodiments;
Figure 2 shows a SIM module with embedded AGPS receiver and antenna according to the invention and its embodiments;
Figure 3 shows a signalling chart of a user initiated location request according to the invention and its embodiments;
Figure 4 shows a signalling chart of a remote device initiated location request according to the invention and its embodiments;
Figure 5 shows a signalling chart of a remote device initiated location request according to the invention and its embodiments; and
Figure 6 shows a positioning request that is processed entirely in the AGPS-SIM card using the AGPS subsystem according to the invention and its embodiments.

### Detailed description of the invention

The user equipment of the invention and its embodiments can be any mobile equipment like 2G (Generation), 2.5G, 3G or 4G user equipment. It can be e.g. a mobile station, a cellular mobile station, a communicator or a computer. The detailed structure and operation of the user equipment and the communications systems are not relevant to the invention, and therefore they are described only to the extent that helps understanding the invention. Furthermore, it should be noted that the invention can be applied to different kind of positioning systems and satellite systems and to different kind of communications systems and networks like fixed networks and packet switched networks or combination thereof and/or to wireless data transmission networks, such as Mobile-IP (Internet-Protocol) networks and user equipment thereof.

For the invention and its embodiments a SIM (Subscriber Identity Module) card can be defined to be a card removably insertable into the user equipment containing data for subscriber identification and/or encipherment of radio communication and/or other security related information. However, it is to be noted that the SIM card according to the invention and its embodiments can but does not have be able to identify the subscriber.

A processor in the SIM card or working with the SIM card can control the access to a memory of the SIM card or to a memory working with the SIM card used for the location of the user equipment e.g. in response to the identity of the location request initiator. The control can mean e.g. the prevention of a location initiator from getting to the information of the memory. This means that in one way of using the SIM card there is no direct access to the memory of the SIM card although there can be one. In one embodiment of the invention the SIM card can recognize the location initiator being authorized to get the information directly from the memory of the SIM card without any authorization requests for locating the user equipment. It is also possible that the user has given for some or all persons and/or authorities preauthorization for the direct access to the memory.

The SIM card can also be a so-called tamper-proofed device offering enough protection in relation to the location of a single person.

The SIM card can also be adapted to fit to different kinds of user equipment, to different kinds of mobile stations such that when inserted e.g. into a conventional cellular mobile station it can adapt to the system of the conventional mobile station and cause it to operate for locating the mobile station.

The SIM card can also comprise and/or be in cooperation with logic(s) and/or software program(s) or application(s), which can control the operation of the invention and its embodiments. The logic(s), the program(s) and/or the application(s) can be in the SIM card, in communication with the SIM card and/or it/they can be loaded to the SIM card and/or to the user equipment for carrying out the invention and its embodiments. The applications comprise e.g. Java and Symbian applications.

In other words, the SIM card can comprise means e.g. a program, for calculating the current location, like the coordinates, of the user equipment. Thus the whole processing of the positioning data and/or the current location can be done with the GPS chip and the SIM processor. The processor(s) of the user equipment are not needed in the calculation but it/they can also be used.

The SIM card can also comprise means e.g. a program, for sending the temporary data, pseudo data to the server for the calculation of the current location of the user equipment.

The Java and Symbian applications can process the location information received from the SIM card and/or from the server in many ways. The Java application can get the location information over the GPRS (General Packet Radio Service) network via the MSLC (Mobile Serving Location Center) server.

The SIM card can be virtual or separate, stand-alone card. For the invention and its embodiments the SIM card can be partly or wholly fixed to the user equipment or partly or wholly removably insertable into the user equipment. It can thus comprise one or more parts. The SIM card can also have different sizes, thicknesses and volumes. Although in the following the name SIM card will be used, it is to be understood that it also refers to different kind of smart cards like to an ICC card (Integrated Circuit Card) or to a chip card. What is important for the invention and its embodiments is that it is a module with embedded information receiver and/or antenna.

The receiver can receive information for locating or for assisting the locationing of the equipment. Thus it can be e.g. a GPS (Global Positioning System) receiver or an AGPS (Assisted GPS) receiver or a receiver for other satellite-positioning systems like NAVSTAR (NAVigation System using Timing And Ranging), GLONAS (Global Navigation Satellite Service) or GALILEO. It must be noted that the module can comprise one or more receivers and/or antennas each of which is adapted to e.g. different positioning systems.

The antenna can be within the module or it can be provided as a separate component. Also the antenna of the user equipment can be used. If then the receiver unit is in the module, the sensitivity of the system can be increased compared to the situation where both the receiver and the antenna are in the module. This however can require the use of new user equipment.

The invention and its embodiments are based on the idea of adding a high accuracy satellite positioning system, like GPS, functionality to the existing non satellite positioning system, like non-GPS, user equipment without any modifications to the device itself but only by inserting a new positioning system, like AGPS, enabled SIM (Subscriber Identity Module) card in it. It is also possible to insert the high accuracy satellite positioning system functionality to the existing satellite positioning system user equipment.

It is possible that the user can locate his/hers position by his/hers own initiative or the user can be located by the initiative of a third person or a service. However, before the third person or an external service can locate the user equipment, it is possible for the user to accept or reject the external positioning initiative unless it is generated by emergency services with authority to do so by law, or by an application or service, which is authorised by the user. In these cases the remote location request sender can be authenticated by a positioning application, like the AGPS application on the SIM card prior to requesting a positioning subsystem, like the AGPS subsystem to generate the location data. The authentication can use digital signature (PKI) or other available secure authentication methods to control the access to the AGPS subsystem functionality. The authentication can also be used for controlling the accessing to the location information for applications running on the SIM or mobile device.

The SIM module can also comprise means for controlling the access to the positing data. When an inquiry for positioning data is received said means can check the right to use and/or the right to get said positioning data based on e.g. the identity of the sender of the inquiry. The SIM module can transmit the positioning data or deny its transmission. The SIM module can also calculate the location and transmit e.g. the coordinates to the initiator of the inquiry. The SIM card can also ask the user of the user equipment for the acceptance of the transmission of said data.

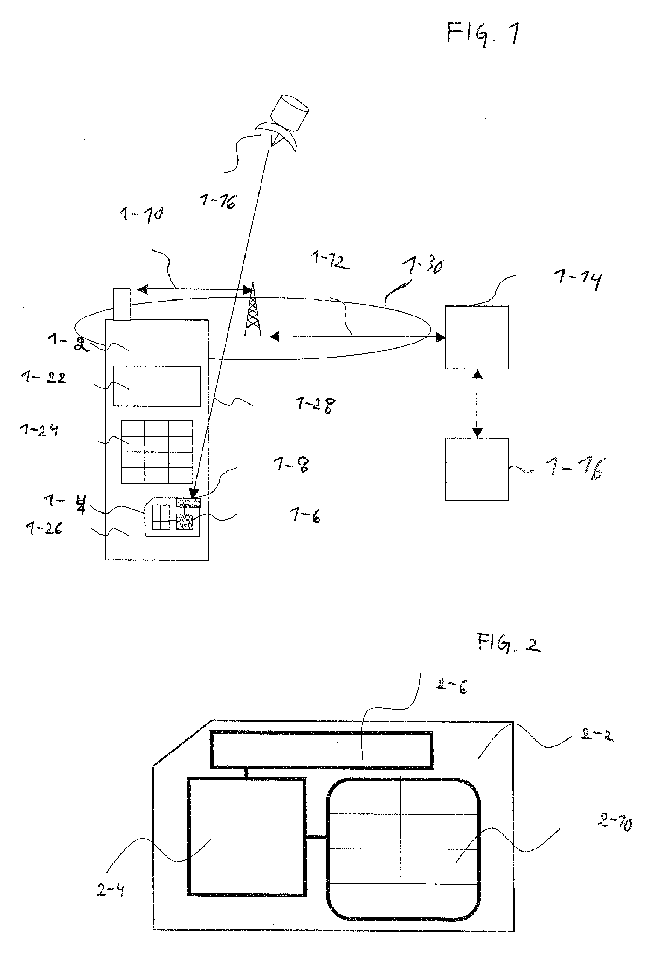

Figure 1 shows user equipment 1-2 with a smart card 1-4, such as a SIM card or a USIM (UMTS subscriber identity module; UMTS, Universal Mobile Telecommunications System) card 1-4. The smart card can have an embedded global satellite-positioning receiver, such as Assisted-GPS (AGPS) receiver 1-6 and a GPS antenna 1-8, together forming an AGPS subsystem. The AGPS subsystem is designed to provide accurate positioning information of the user equipment. The embedded AGPS receiver is adapted to receive AGPS assistance data 1-10, 1-12 from a network based Location Server 1-14 via a cellular network 1-30, mobile device 1-2 and SIM card contacts using e.g. SIM Toolkit API protocol or other protocol usable for communication between the SIM card and the user equipment.

One or more of the antennas of the smart card can be a chip antenna adapted to be fitted on the smart card. Its material can be e.g. ceramic. The size of the antenna can be very small, e.g. 3x10x0.7 mm.

Both the receiver(s) and the antenna(s) can be constructed in one or more parts and the receiver and the antenna can be integrated partly or totally into one or more integrated circuits. The receiver and the antenna can thus be integrated into the same substrate or into at least two different substrates.

Thus the receiver and the antenna can be separate components, they can be part of the module or the chip or they all can be constructed as a single chip component.

The assistance data can include information about the GPS satellites 1-16, of which signal the AGPS receiver should listen to. The AGPS device can thus consist on the AGPS receiver combined with a wireless modem or a full functional cellular phone.

SIM Toolkit API protocol can be defined between the SIM card and the user equipment defining e.g. communication with applications of SIM Toolkit and the usage of a display, a keyboard and menus. The toolkit can be defined to be set of commands for the application running on a SIM, processing of SIM, user equipment, communications network and external apparatus interfaces by means of which additional functions may be added to user equipment. The commands can comprise e.g.: profile download, data download to SIM, proactive applications on SIM, menu selection, and call control by SIM. Alternatively other protocols can be used instead of or in addition to the SIM Toolkit API protocol. These protocols comprise e.g. fast communication protocols.

The AGPS receiver and the AGPS application 1-6 can communicate with the mobile device using SIM Toolkit interface. It is used for example to receive the AGPS assistance data 1-10, 1-12 and send location information to the server as well as for using the mobile device display 1-2 and input from the keypad 1-24. The location information can be communicated between the mobile device and one or more network based servers 1-14, 1-16 e.g. via SMS (Short Message Service), USSD (Unstructured Supplementary Service Data), MMS (Multimedia Messaging Service), IP (Internet Protocol) or other communication protocols.

From the mobile user equipment point of view, the AGPS subsystem and functionality can be hidden behind the AGPS SIM Toolkit application by using a SIM processor with two input/output ports, where one is dedicated to the SIM contacts 1-24 and the other port is dedicated for the AGPS subsystem.

The AGPS receiver 1-6 can detect the satellite signals 1-28 and calculate a pseudo-position data, a first estimate location. This pseudo-position data can be further processed to get the actual geographical location using the processing power of the SIM card and a program residing in its memory. Alternatively, the pseudo-position data can be sent to a network-based server for processing actual geographical location.

The invention can use text or multimedia messages or a software application 1-6 residing on the SIM card 1-4 or on a software program 1-26 residing on the mobile device to display the location information to the user and to provide an improved user interface 1-22.

Figure 2 shows a SIM module 2-2 according to the invention and its embodiments. In addition to all typical elements and characteristics it can comprise an embedded (A)GPS receiver 2-4 and an antenna 2-6. Contacts 2-10 describe the interface of the SIM card with its environment, e.g. with the mobile station. The contact(s) can also be adapted to convey the positioning data and/or other data needed to calculate or assisting in calculation of the location or the estimate of the location of the user equipment to and/or from the SIM card and/or the user equipment. Also the loading of the logic, programs and/or different applications to and from the SIM card and/or the user equipment and the communication with the logic, programs and/or different applications are possible via the contacts. Thus the SIM card and/or the user equipment can also comprise logic, program and/or application means for applying the device for location purposes and/or for performing routines for location purpose(s). The AGPS receiver can also e.g. be powered from the user equipment power supply via the SIM card contacts.

The AGPS receiver chip and SIM chip can be separate chips or they can be integrated on the same substrate. In the following different ways of using the invention and its embodiments will be described. It is possible for the user to locate himself autonomically such that the user is not in communication with the server, i.e. without the assistance data. However, it can be slower than with the help of the assistance data. The user can also be located without his allowance based on the certain laws, like E112 and E911, which can authorize the network operator to give the location information to the authorities. The authorization is not needed to locate the emergency call, but it is needed to locate all other calls. The user can give his authorisation only for one case or permanently.

The user equipment must be on for it to be located. Also the network connection can be needed so that the remote location request can be transmitted. If there is no network connection and the assistance data is too old, the user can made a typical GPS location with only the SIM card and show the coordinates x, y and/or z on the screen of the user equipment.

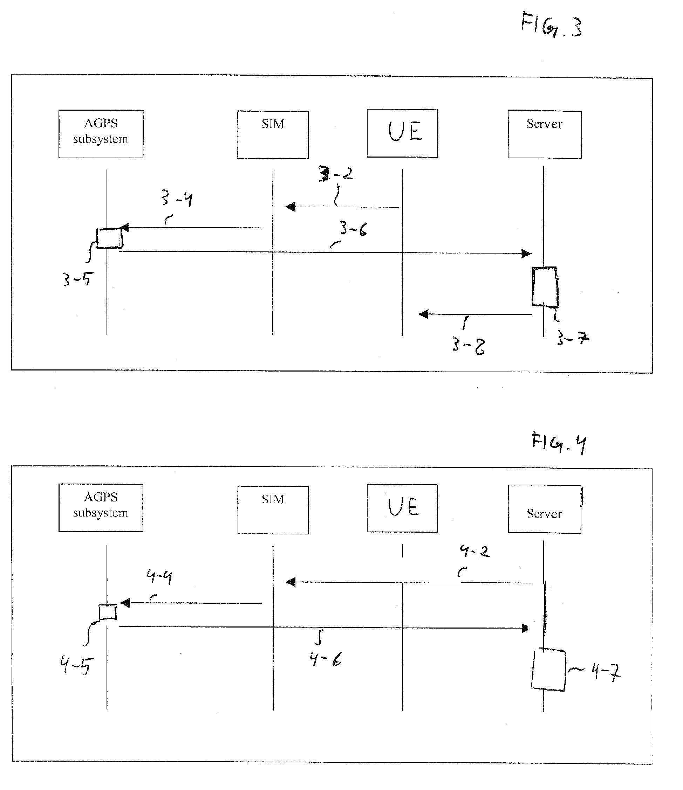

Figure 3 shows a signalling chart of a user initiated location request according to the invention and its embodiments. In it the user equipment can be used without any specific location based, navigation or MAP (Mobile Application Part) application requiring significant calculation power.

According to Figure 3, the user of the user equipment UE wants to know his/hers accurate location. Thus in step 3-2 (s)he can send a position request to the SIM card, e.g. by selecting "Show the location" with the help of the user interface. The request is forwarded in step 3-4 to the AGPS subsystem for calculation of the current position of the user equipment, which can be processed in step 3-5. In step 3-6 the position data generated by the GPS receiver can be sent to the server, e.g. to the location server or to the SMLC (Serving Mobile Location Centre) server, which can then in step 3-7 calculate the position data and create a map, geographical coordinates of the location. The location information can then be returned to the user equipment in step 3-8 and it can be presented e.g. visually, tactiovisually or as audio data like in all other embodiments of the invention. The presentation of information is not limited to certain methods or ways, but it can be as simple as possible and/or as suitable as possible for each current case. So different kinds of information presentations like text, map or voice or combinations thereof are possible.

Figure 3 can be a situation, in which a person wants to find to a place, like a hotel, restaurant or any street address. The user can type a request using the wireless device, which will ask the AGPS subsystem to generate position data that will be sent together with the destination information to location server. The location server can then find the best route to the destination and send instructions back to the wireless device as text and/or picture and/or voice format.

Figure 4 shows a signalling chart of a remote device initiated location request according to the invention and its embodiments. It can describe e.g. a situation where a person with a mobile device is missing. An operator initiates a location request from the Location Server on the network. The location request will be sent over the network to the handset, which redirects it to the SIM card and to the AGPS subsystem. The location client application can ask a location data from the AGPS subsystem and return it to the Location Server.

In Figure 4 the remote equipment location request without any user interaction required can be used e.g. by emergency services to locate the user equipment. In other words, the subscriber identity module can be adapted to transmit the positioning data spontaneously. The locationing can start in step 4-2, where the positioning request can be sent from the location server to the user equipment and its SIM card. The SIM card receives the request and forwards it to its AGPS subsystem in step 4-4. After that the current position of the user equipment can be calculated in step 4-5 in the AGPS subsystem. In step 4-6 the position data can be transmitted to the location server. The location data can also be sent to other servers and/or other user equipment if needed and/or allowed. In the case where AGPS subsystem calculates in step 4-5 pseudo position data, the data can be transmitted in step 4-6 to the location server, which can then in step 4-7 calculate the final location of the user equipment.

It must be noted that the current location of the user equipment can be calculated by the user equipment and/or by the server, which can then return the location to the user equipment. The location can be calculated based only on the information received e.g. from at least two location satellites or in addition to that based also on the assisting location information. Thus the user equipment of the invention and its embodiments can be user equipment adapted to receive a location request; to receive positioning data from at least two satellites; and to calculate the current location of the user equipment at least partly based on said positioning data. The user equipment can further be adapted to receive assisting positioning data e.g. from one or more communications network servers; and to calculate the current location of the user equipment at least partly based on said positioning data and said assisting positioning data.

The positioning data can comprise user equipment's geographical coordinates like longitude and latitude coordinates and/or temporary data, which can be used in calculation of the current location of the user equipment.

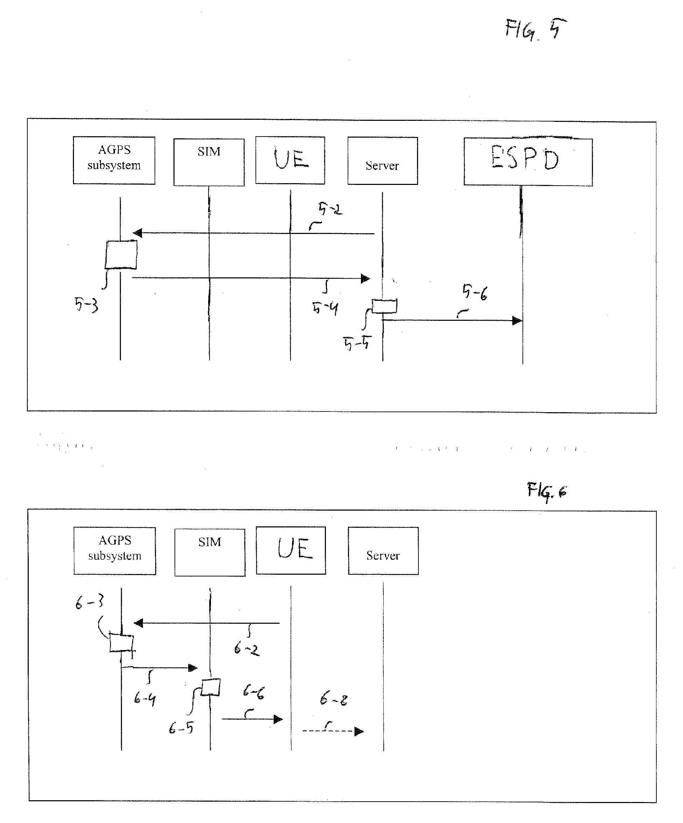

Figure 5 shows a signalling chart of the remote device initiated location request according to the invention and its embodiments. The remote equipment location request without any user interaction required can be used e.g. by emergency services to locate the user equipment, such as a GMS mobile phone, where the location data is forwarded directly to a mobile emergency services unit's GPS device. In step 5-2 the position request is sent from the server directly to the AGPS subsystem. In step 5-3 position data can be generated and position data can be transmitted to the server in step 5-4. The location can be calculated in the server in step 5-5 and the location data can be transmitted to the emergency service positioning device ESPD in step 5-6.

Figure 6 shows a positioning process that is processed entirely in the AGPS-SIM card using the AGPS subsystem according to the invention and its embodiments. A person can be lost and wants to know where he is. Thus in step 6-2 the positioning request can be sent from user equipment to the AGPS subsystem. In step 6-3 pseudo position data can be generated in the AGPS subsystem and the pseudo position data can be sent from the AGPS subsystem to the SIM card in step 6-4. The actual geographical position of the user equipment can be calculated in a processing unit of the SIM card in step 6-5 and the calculated position data can be forwarded to the user equipment in step 6-6, which can the present it in any suitable means. It is also possible to send the location data to the location server in step 6-8.

The location data can be used in many ways. In one embodiment the location data is not shown to the user. This can be the case with the emergency services, like E112. In another embodiment also in this case the coordinates can be displayed for the user.

In another embodiment the user can select "Services - Get location" from the menu of the user equipment and/or the SIM card can present the coordinates or another indication like "At home" to the user interface. In yet another embodiment SIM can send the positioning data to the server of the network, which can then return the current location information of the user equipment as an SMS message, an MMS message, or another messaging message. In other words, the module 1-4, 2-2 can be adapted to transmit the positioning data in response to an inquiry from the mobile station and/or the location server.

In still another embodiment the current location can be returned and/or displayed as graphical information, like an MMS map.

The invention and its embodiments can be used in many different ways and in many different situations. In addition to what is described above there exist many other possibilities to use the invention and its embodiments. In one example two persons want to find each other. Person A will send a location request with its position data from the AGPS subsystem to the Location Server, which will forward the request to person B's mobile device. If B accepts the request, the mobile device B can request position data from the AGPS subsystem and send that to the Location Server. The Location Server will calculate the locations, a route in between them and a map and send the results to both parties wireless devices.

In another example a group of more than two persons can be located. In yet another example the system offers also information on the height of the receiver thus making it even easier for locating one or more, possibly missing persons.

The invention and its embodiments offer many fields of applications like tracking of a car, offering cheaper calls, monitoring the movements, travel and/or circulation of goods and vehicles and in navigation and playing games. E.g. the Symbian and/or the Java applications that are in the memory of the mobile phone or in a GSM modem and/or in the processor of the SIM card and/or the mobile station can be in communication with the SIM card application therein. This means that e.g. the navigation or the playing application can ask a GPS location information directly from the SIM card locally. For this purpose a licence (a certificate/a key) may be needed, with which the application get the access to the location information.

This invention resolves the problem of not being able to locate a mobile device with high accuracy. It adds a high accuracy GPS functionality to the existing non-GPS mobile devices without any modifications to the device itself but only by inserting a new AGPS enabled SIM card in it.

An advantage of the method and arrangement of the invention is that user equipment can be located more accurately.

Another advantages of the invention and its embodiments comprise a module having a low current and power consumption, low processing need, and high component density leading to an efficient component and thus to an efficient way of locating the user equipment.

Another advantage of the invention and its embodiments is that it is very cost efficient, it offers accurate location services to the current and future generation of user equipment, because the invention is using a minimum amount of additional components and is relying on the mobile device in communication, power supply and user interface.

It will be obvious to a person skilled in the art that, as the technology advances, the inventive concept can be implemented in various ways. The invention and its embodiments are not limited to the examples described above but may vary within the scope of the claims.

## Claims

1. A subscriber identity module (1-4, 2-2) comprising contacts (2-10) for connecting to a mobile station, **characterized in that** the module (1-4, 2-2) comprises a satellite positioning system receiver (1-6, 2-4) for determining positioning data, an antenna (1-8, 2-6) and means for conveying the positioning data via the contacts.

2. A subscriber identity module (1-4, 2-2) according to claim 1, **characterized in that** it said positioning data is temporary data and the subscriber identity module (1-4, 2-2) causes the mobile station (1-2) to transmit said temporary data to a location server in a communications network for calculating the current location of the mobile station (1-2) at least partly based on said temporary data.

3. A subscriber identity module (1-4, 2-2) according to claims 1 or 2, **characterized in that** it said positioning data comprises geographical coordinates of the mobile station (1-2).

4. A subscriber identity module (1-4, 2-2) according to any one of claims 1 to 3, **characterized in that** it the subscriber identity module (1-4, 2-2) is adapted to transmit the positioning data in response to an inquiry from the mobile station and/or the location server.

5. A subscriber identity module (1-4, 2-2) according to any one of claims 1 to 3, **characterized in that** it the subscriber identity module (1-4, 2-2) is adapted to transmit the positioning data spontaneously.

6. A subscriber identity module (1-4, 2-2) according to any one of claims 1 to 5, **characterized in that** it the subscriber identity module (1-4, 2-2) causes the mobile station (1-2) to transmit said positioning data to the location server in the network.

7. A subscriber identity module (1-4, 2-2) according to any one of claims 1 to 6, **characterized in that** it the subscriber identity module (1-4, 2-2) is adapted to receive assisting positioning data via the mobile station (1-2) and based at least partly on said assisting positioning data calculate the geographical coordinates of the mobile station (1-2).

8. A subscriber identity module (1-4, 2-2) according to any one of claims 1 to 7, **characterized in that** the SIM module comprises means for controlling the access to the positing data.

9. A subscriber identity module (1-4, 2-2) according to any one of claims 1 to 8, **characterized in that** the satellite positioning system receiver (1-6, 2-4) and the antenna (1-8, 2-6) are integrated on the same substrate of an integrated circuit.

10. A subscriber identity module according to any one of claims 1 to 8, **characterized in that** the satellite positioning system receiver (1-6, 2-4) and the antenna (1-8, 2-6) are separate integrated circuits.

11. A subscriber identity module according to any one of claims 1 to 10, **characterized in that** the module comprises one or more satellite positioning system receivers (1-6, 2-4) of GPS, GALILEO, NAVSTAR and/or GLONAS system.

12. A mobile station (1-2), **characterized in that** it comprises a subscriber identity module (1-4, 2-2) according to any one of claims 1 to 11.

13. A method for locating a mobile station (1-2) in a communications network (1-30), the mobile station (1-2) comprising a subscriber identity module (1-4, 2-2) comprising contacts (2-10) for connecting to the mobile station, **characterized in that** the subscriber identity module (1-4, 2-2) comprises a satellite positioning system receiver (2-4) for determining positioning data, an antenna (2-6) and means for conveying the positioning data via the contacts, the method comprising the steps of
- receiving (3-2, 4-2, 5-2, 6-2) a location request for locating the mobile station (1-2);
- receiving (3-5, 4-5, 5-3, 6-3) positioning data from at least two satellites (1-16); and
- calculating (3-5, 3-7, 4-5, 4-7, 5-3, 5-5, 6-3, 6-5) the current location of the mobile station (1-2) at least partly based on said positioning data.

14. A method according to claim 13, **characterized by** further receiving (1-10, 1-12) assisting positioning data from a communications network server (1-14) and calculating (3-5, 3-7, 4-5, 4-7, 5-3, 5-5, 6-3, 6-5) the current location of the mobile station (1-2) at least partly based on said positioning data and said assisting positioning data.

15. A method according to claims 13 to 14, **characterized by** asking the user of the acceptance of the locationing of the mobile station (1-2) prior to calculating (3-5, 3-7, 4-5, 4-7, 5-3, 5-5, 6-3, 6-5) the current location of the mobile station (1-2).

16. A method according to any one of claims 13 to 15, **charac- terized** in that the satellite positioning system receiver (1-6, 2-4) is a receiver of GPS system and by receiving the assisting positioning data via Subscriber Toolkit API interface.
